(19) Europäisches Patentamt
European Patent Office
Office européen des brevets

(11) **EP 3 536 557 B1**

(12) **EUROPEAN PATENT SPECIFICATION**

(45) Date of publication and mention of the grant of the patent:
**13.05.2020 Bulletin 2020/20**

(51) Int Cl.:
***B60R 1/00*** *(2006.01)*

(21) Application number: **18160850.6**

(22) Date of filing: **09.03.2018**

(54) **METHOD AND APPARATUS FOR DISPLAYING SIDE REAR VIEW AND VEHICLE COMPRISING THE SAME**

VERFAHREN UND VORRICHTUNG ZUR ANZEIGE EINER SEITENRÜCKANSICHT UND FAHRZEUG DAMIT

PROCÉDÉ ET APPAREIL D'AFFICHAGE DE VUE ARRIÈRE LATÉRALE ET VÉHICULE LES COMPRENANT

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | (72) Inventor: **Moldenhauer, Ingo**<br>**70567 Stuttgart (DE)** |
| (43) Date of publication of application:<br>**11.09.2019 Bulletin 2019/37** | (74) Representative: **Schmitt-Nilson Schraud Waibel Wohlfrom**<br>**Patentanwälte Partnerschaft mbB**<br>**Pelkovenstraße 143**<br>**80992 München (DE)** |
| (73) Proprietor: **Alpine Electronics, Inc.**<br>**Tokyo (JP)** | (56) References cited:<br>**WO-A1-2015/182457      WO-A1-2017/204203**<br>**KR-A- 20170 019 839      US-A1- 2008 151 048** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

The present invention relates to a technology for supporting driving a vehicle. More particularly, it relates to a method and an apparatus for displaying a side rear view of a vehicle, a vehicle comprising the same, and a computer program product.

In order to replace or complement a conventional side-view or rear view mirror used in a vehicle, an electronic mirror ("e-mirror") technology has recently been introduced. To implement the e-mirror technology, a camera is mounted on a side part or a rear part of the vehicle to take side rear view or rear view images of the vehicle. The images taken by the camera are displayed on a display provided inside of the vehicle to enable a driver to see the outside of the vehicle through the display.

Patent document WO 2017/204203 A1 discloses a vehicle monitoring system with a rear imaging unit.

In an example of the e-mirror technology, a sensor is mounted nearby a side-view mirror of a vehicle to detect another vehicle located in a blind spot area. If a vehicle is detected by the sensor, wide angle images are generated from side rear images taken by a camera to be displayed on a display installed inside the vehicle. If no vehicle is detected by the sensor, narrow angle images are generated and displayed on the display. In this way, a driver of the vehicle can see another vehicle located in the blind spot area on the display.

Such an e-mirror technology requires an additional device like a sensor to detect another vehicle located in the blind spot area other than a camera. In addition, prior art e-mirror technology is not satisfactory in terms of providing a real-like image of a vehicle moving in the blind spot area.

It is an object of the present invention to provide an improved e-mirror technology without an additional device like a sensor other than a camera. It is another object of the present invention to provide an improved e-mirror technology with which a driver can detect another vehicle moving in a blind spot area as bigger as possible. It is further another object of the present invention to provide a vehicle equipped with such an improved e-mirror technology. It is further another object of the present invention to provide a computer program product configured to carry out a method in accordance with the present invention.

The present invention relates to an apparatus, a method, a computer program product, and a vehicle according to the appended claims.

As an aspect of the present invention, an apparatus for use in a vehicle to display a side rear view of the vehicle is provided according to claim 1.

As another aspect of the present invention, a method of displaying a side rear view of a vehicle on a display mounted inside the vehicle is provided according to claim 9.

In an embodiment the present invention, when the width from the reference line to the opposite end of the second vehicle is equal to or smaller than a threshold, the second partial image is displayed on the second display area without scaling. The reference line may be a line extending from the top to the bottom of the image.

The reference line may be either a strictly vertical line or a substantially vertical line. The scaling factor may increase proportionally depending on the width from the reference line to the opposite end of the second vehicle. Scaling the second partial image comprises compressing the second partial image horizontally as much as the scaling factor.

In another embodiment of the present invention, the control unit is further configured to detect an object of the second vehicle in the second partial image to measure the width from the reference line to the opposite end of the second vehicle to determine the scaling factor based on the measured width, and scale the second partial image to produce the third partial image. The scaling factor may be equal to a ratio between the width from the reference line to the end of the second vehicle and a width of the second display area. The threshold may be equal to the width of the second display area. The second partial image may cover a blind spot area of the vehicle.

As another aspect of the present invention, a computer program product comprising software code sections is provided according to claim 13.

As further another aspect of the present invention, a vehicle comprising an apparatus with features according to the embodiments of the present invention is provided according to claim 14.

It is to be understood that both the foregoing general description and the following detailed description are exemplary, and are intended to provide further explanation of the invention as claimed. Other advantages and features of the invention will be apparent from the following description, drawings, and claims.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:

Fig. 1 is a schematic view of a front panel inside a vehicle in accordance with an exemplary embodiment of the present invention;

Fig. 2 shows a schematic diagram of an apparatus in accordance with an exemplary embodiment of the present invention;

Fig. 3 is a flow chart showing time sequential operations of a control unit in accordance with an exemplary embodiment of the present invention; and

Figs. 4A-4C are schematic views showing a relationship between a side rear view image and a screen image on a display in accordance with an exemplary embodiment of present invention.

Reference will now be made to the drawing figures to describe exemplary embodiments of the present invention.

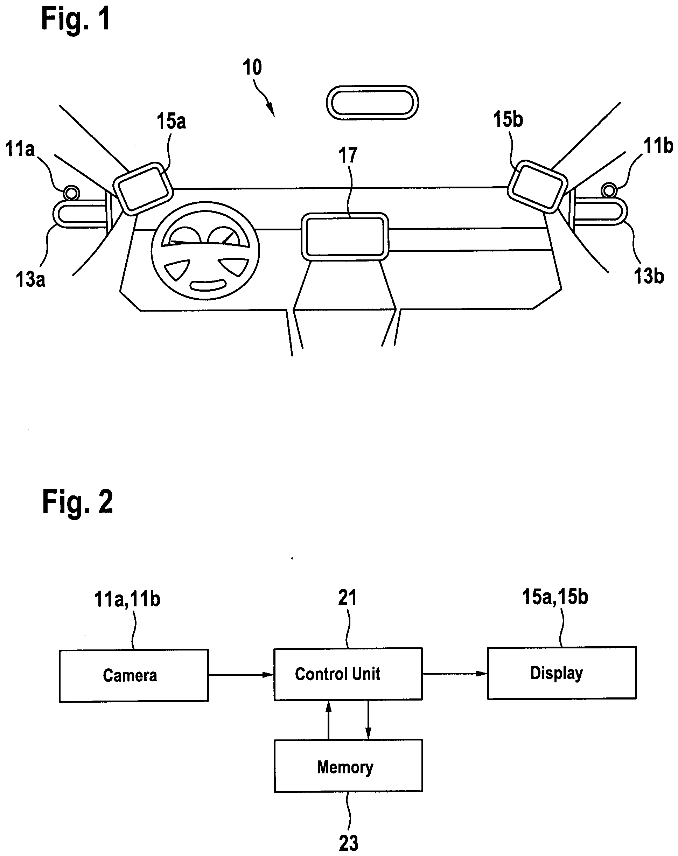

Reference is made to Fig. 1 and Fig. 2. Fig. 1 is a schematic view of a front panel inside a vehicle in accordance with an exemplary embodiment of the present invention. Fig. 2 shows a schematic diagram of an apparatus in accordance with an exemplary embodiment of the present invention.

A vehicle 10 is equipped with an apparatus (hereinafter "e-mirror apparatus") for displaying a side rear view of the vehicle 10. The e-mirror apparatus comprises two cameras 11a, 11b mounted on side-view mirrors 13a, 13b, two displays 15a, 15b installed in both sides inside the vehicle 10, a control unit 21, and a memory 23. Each of cameras 11a, 11b takes images of a side rear view of the vehicle 10 and the side rear view images captured by the cameras 11a, 11b are sent to the control unit 21. The control unit 21 which is, for example, a microprocessor or a central processing unit (CPU) performs an image processing on the side rear view images using one or more programs stored in the memory 23. The memory 23 may comprise RAM and/or ROM. The images output from the control unit 21 are sent to the displays 15a, 15b to be displayed. A driver of the vehicle 10 can be well informed of situations happening outside the vehicle 10, especially in a blind spot area of both sides of the vehicle, by watching the displays 15a, 15b.

The locations where the cameras 11a, 11b are mounted in Fig. 1 are exemplary. The cameras 11a, 11b may be mounted on other locations outside the vehicle 10 where a side rear view image can be captured. In case of a car without side-view mirrors, the cameras 11a, 11b may be mounted nearby the bottom of A-pillars. The number and the locations of the displays 15a, 15b are also exemplary. Only one display 15a, 15b may be installed anywhere inside the vehicle 10 where the driver can easily watch. A central display panel 17 may be used as a display panel 15a, 15b for the e-mirror apparatus according to an embodiment of the present invention.

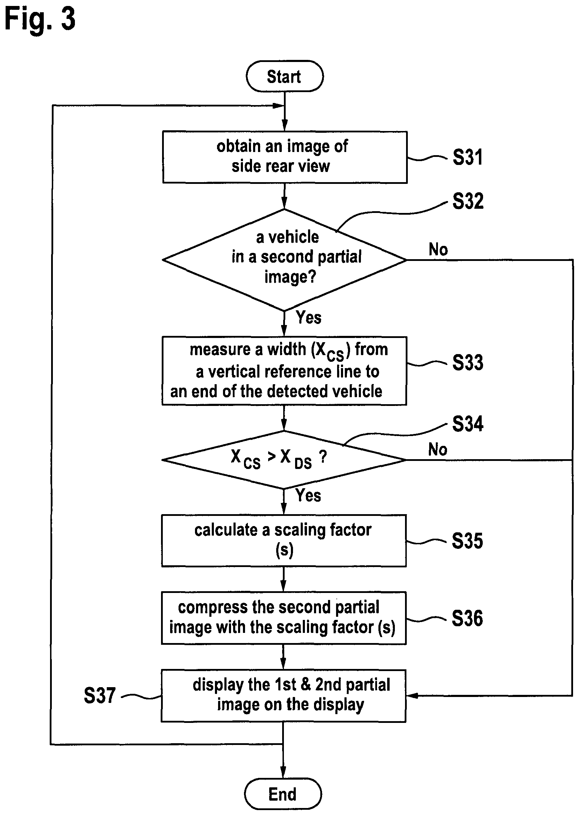

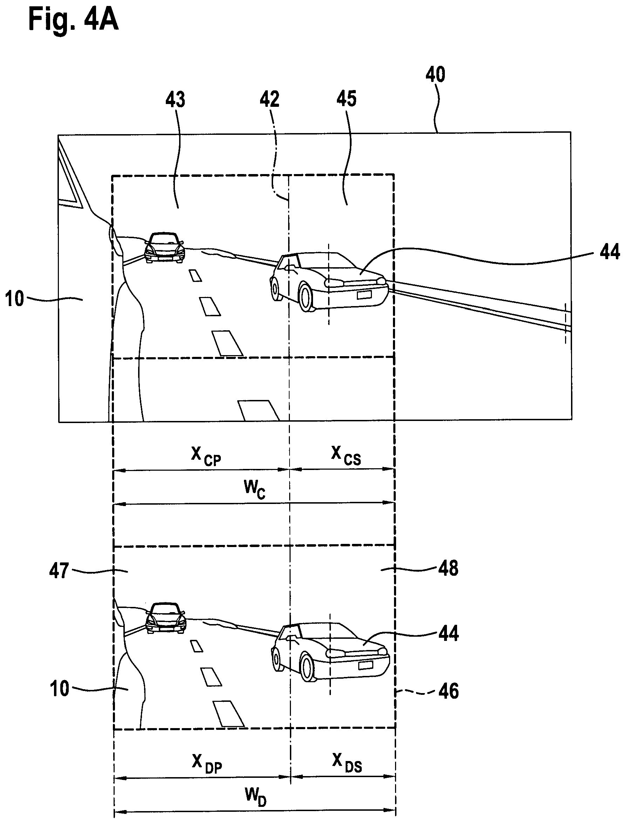

Reference is made to Fig. 3 which is a flow chart showing time sequential operations of the control unit 21 and Figs. 4A-4C which are schematic views showing a relationship between a side rear view image captured by the camera 11a, 11b and a screen image displayed on the displays 15a, 15b. For convenience's sake, a relationship between the camera 11a and the display 15a of the left side from the driver seat will be hereinafter described.

When the driver starts the vehicle 10 or turns on the e-mirror apparatus, the control unit 21 starts operations. At the step of S31, the control unit 21 obtains an image of a side rear view taken by the camera 11a. An upper image 40 in Figs. 4A-4C is an example of the side rear view image captured by the camera 11a to be sent to the control unit 21. The side rear view image 40 comprises a first partial image 43 and a second partial image 45, and the first and second partial images 43, 45 are divided by a vertical reference line 42 which is a fixed line virtually drawn by the control unit 21. A lower image 46 in Figs. 4A-4C is a screen image displayed on a screen of the display panel 15a. The screen 46 of the display 15a comprises a first display area 47 and a second display area 48. The first and second display areas 47, 48 are also divided by the vertical reference line 42 and have fixed locations on the screen 46 of the display 15a. The vertical reference line 42 on the screen 46 of the display 15a may be either an actual or virtual line. It may be either a strictly vertical line or a substantially vertical line. As can be seen in Figs. 4A-4C, the first partial image 43 is displayed on the first display area 47 without scaling the first partial image 43, and the second partial image 45 is displayed on the second display area 48 with or without horizontally compressing the second partial image 43.

Fig. 4A shows an example that the first and second partial images 43, 45 have the same sizes with the first and second display areas 47, 48, respectively. In this example, the first and second partial images 43, 45 do not need to be scaled to be displayed on the first and second display areas 47, 48. As another example, however, it is also possible for the first and second partial images 43, 45 to have different sizes with the first and second display areas 47, 48, respectively. In this case, the first and second partial images 43, 45 needs to be scaled to be adapted to the sizes of the first and second display areas 47, 48, respectively.

Referring to Fig. 3 again, at the step of S32, the control unit 21 checks if the second partial image 45 contains another vehicle 44. An object recognition program stored in the memory 23 may be used by the control unit 21 for the checking. If no vehicle is detected in the second partial image 45, the control unit 21 displays the first and second partial images 43, 45 on the first and second display areas 47, 48 of the display unit 46, respectively, without horizontally compressing the second partial image 45.

In Figs. 4A-4C, $X_{CP}$ and $X_{CS}$ represent widths of the first and second partial images 43, 45, respectively, and $X_{DP}$ and $X_{DS}$ represent widths of the first and second display areas 47, 48, respectively. The width ($X_{CS}$) of the second partial image 45 has a minimum value which is the same as the width ($X_{DS}$) of the second display area 48.

If another vehicle 44 is detected in the second partial image 45, at the step of S33, the control unit 21 measures a distance (i.e. a width) from the vertical reference line 42 to an opposite end of the detected vehicle 44. In case that there are more than two vehicles captured in the second partial image 45, the one located farther to the right is selected and then a width from the vertical reference line 42 to the opposite end of the selected vehicle is measured. When the measured distance is smaller than or equal to $X_{DS}$, $X_{DS}$ is determined to be $X_{CS}$. Otherwise, the measured distance is decided to be $X_{CS}$. At the step of S34, $X_{CS}$ is compared with $X_{DS}$, and then, if $X_{CS}$ is greater than $X_{DS}$, at the step of S35, the control unit 21 determines a scaling factor (S) to be used to scale the second partial image 45 to be displayed on the second display area 48. On the other hand, if $X_{CS}$ is equal to $X_{DS}$, at the step of S37, the control unit 21 displays the first and second partial images 43, 45 on the display unit 46 without horizontally compressing the second partial image 45, as shown in Fig. 4A.

[Table 1]

| $W_D$ | $W_C$ | $X_{CP}$ | $X_{CS}$ | $X_{DP}$ | $X_{DS}$ | S |
|---|---|---|---|---|---|---|
| 100 | 100 | 70,0 | 30,0 | 70,0 | 30,0 | 1,000 |
| 100 | 101 | 70,0 | 31,0 | 70,0 | 30,0 | 1,033 |
| 100 | 102 | 70,0 | 32,0 | 70,0 | 30,0 | 1,067 |
| 100 | 103 | 70,0 | 33,0 | 70,0 | 30,0 | 1,100 |
| 100 | 104 | 70,0 | 34,0 | 70,0 | 30,0 | 1,133 |
| 100 | 105 | 70,0 | 35,0 | 70,0 | 30,0 | 1,167 |
| 100 | 106 | 70,0 | 36,0 | 70,0 | 30,0 | 1,200 |
| 100 | 107 | 70,0 | 37,0 | 70,0 | 30,0 | 1,233 |
| 100 | 108 | 70,0 | 38,0 | 70,0 | 30,0 | 1,267 |
| 100 | 109 | 70,0 | 39,0 | 70,0 | 30,0 | 1,300 |
| 100 | 110 | 70,0 | 40,0 | 70,0 | 30,0 | 1,333 |
| 100 | 111 | 70,0 | 41,0 | 70,0 | 30,0 | 1,367 |
| 100 | 112 | 70,0 | 42,0 | 70,0 | 30,0 | 1,400 |
| 100 | 113 | 70,0 | 43,0 | 70,0 | 30,0 | 1,433 |
| 100 | 114 | 70,0 | 44,0 | 70,0 | 30,0 | 1,467 |
| 100 | 115 | 70,0 | 45,0 | 70,0 | 30,0 | 1,500 |
| 100 | 116 | 70,0 | 46,0 | 70,0 | 30,0 | 1,533 |
| 100 | 117 | 70,0 | 47,0 | 70,0 | 30,0 | 1,567 |
| 100 | 118 | 70,0 | 48,0 | 70,0 | 30,0 | 1,600 |
| 100 | 119 | 70,0 | 49,0 | 70,0 | 30,0 | 1,633 |
| 100 | 120 | 70,0 | 50,0 | 70,0 | 30,0 | 1,667 |
| 100 | 121 | 70,0 | 51,0 | 70,0 | 30,0 | 1,700 |
| 100 | 122 | 70,0 | 52,0 | 70,0 | 30,0 | 1,733 |
| 100 | 123 | 70,0 | 53,0 | 70,0 | 30,0 | 1,767 |
| 100 | 124 | 70,0 | 54,0 | 70,0 | 30,0 | 1,800 |
| 100 | 125 | 70,0 | 55,0 | 70,0 | 30,0 | 1,833 |
| 100 | 126 | 70,0 | 56,0 | 70,0 | 30,0 | 1,867 |
| 100 | 127 | 70,0 | 57,0 | 70,0 | 30,0 | 1,900 |
| 100 | 128 | 70,0 | 58,0 | 70,0 | 30,0 | 1,933 |
| 100 | 129 | 70,0 | 59,0 | 70,0 | 30,0 | 1,967 |

(continued)

| $W_D$ | $W_C$ | $X_{CP}$ | $X_{CS}$ | $X_{DP}$ | $X_{DS}$ | S |
|---|---|---|---|---|---|---|
| 100 | 130 | 70,0 | 60,0 | 70,0 | 30,0 | 2,000 |

Table 1 shows a relationship between various dimensions ($W_D$, $W_C$, $X_{CP}$, $X_{CS}$, $X_{DP}$, $X_{DS}$) in the rear side view image 40, the screen image 46 and the scaling factor (S) according to an embodiment of the present invention. In Table 1, no unit is specified and abstractive numbers are used for convenience's sake. The relationships between various dimensions in Table 1 can be expressed as follows:

$$W_C = X_{CP} + X_{CS}$$

$$W_D = X_{DP} + X_{DS}$$

$$X_{DP} = X_{CP}$$

$$X_{DS} = X_{CS}/S$$

$$S = X_{CS}/X_{DS} = (W_C - X_{CP})/X_{DS}$$

As can be seen in Table 1, $X_{CS}$ varies depending on the distance (or width) from the vertical reference line 42 to the opposite end of the vehicle 44 captured in the second partial image 45. Since $W_C$ is the sum of $X_{CP}$ and $X_{CS}$, $W_C$ also varies depending on the distance. When the distance is smaller than $X_{DS}$, the values of $X_{CS}$ and $W_C$ are fixed to be equal to $X_{DS}$ and $W_D$, respectively. $W_D$ is a width of the screen 46 of the display 15a.

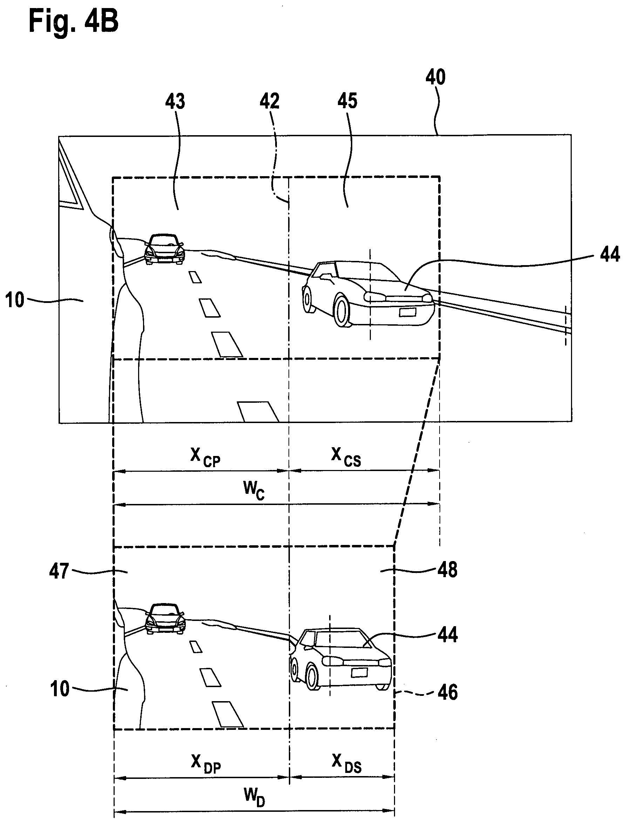

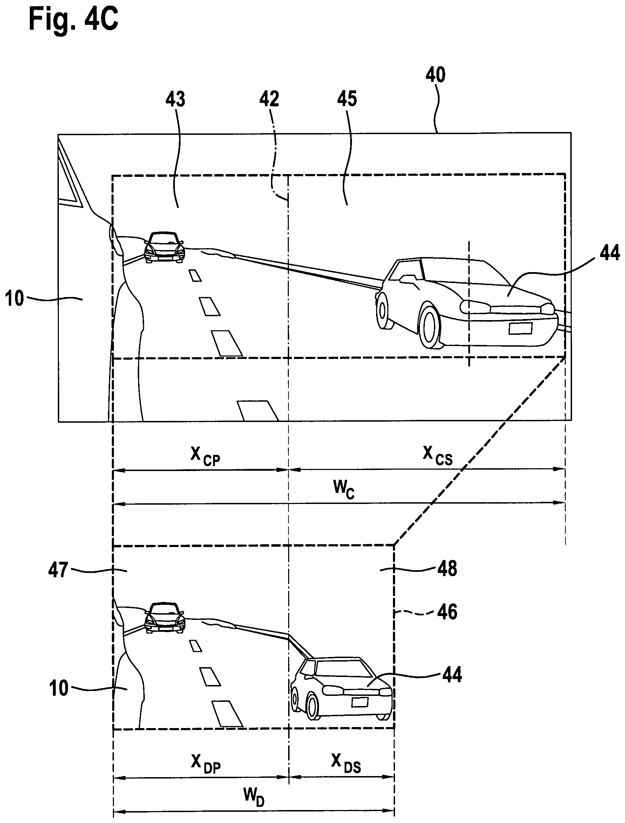

Referring to Fig. 3 again, after the scaling factor (S) is determined at the step of S35, the control unit 21 performs scaling on the second partial image 45 with the scaling factor (S) for the second partial image 45 to be adjusted to a size of the second display area 48. As an example of the scaling, the second partial image 45 may be compressed horizontally as much as the determined scaling factor (S). For example, in Table 1, when the distance from the vertical reference line 42 to the opposite end of the detected vehicle 44 in the second partial image 45 is equal to 60.0, the value of $X_{CS}$ is 60.0 and thus the scaling factor (S) is determined to be 60.0/30.0 (=2.0), and then the second partial image 45 is compressed horizontally as much as the scaling factor (2.0) for a width of the compressed second partial image 45 to be adjusted to fit in the width ($X_{DS}$) of the second display area 48. Fig. 4B and Fig. 4C show examples of the side rear view image 40 and the screen image 46 where the second partial image 45 is compressed horizontally by the control unit 21 to be adjusted to fit in the width ($X_{DS}$) of the second display area 48.

At the step of S37 in Fig. 3, the control unit 21 controls the display 15a to display the first partial image 43 and the non-compressed or compressed second partial image 45, where the first partial image 43 is displayed on the first display area 47 and the second partial image is displayed on the second display area 48.

The steps of S31-S37 are repeated until the vehicle (10) or the e-mirror apparatus is turned off.

In this way, the opposite end of the other vehicle 44 captured in the second partial image 45 coincides with the right end of the second display area 48, so that the image of the other vehicle 44 fits into the second display area 48 as much as possible. As a result, the driver of the vehicle 10 can see the other vehicle 44 located, for example, in the blind spot area, with the possibly biggest image through the second display area 48 of the display 15a. Moreover, the other vehicle 44 located in the blind spot area can be detected using an object detection algorithm or program on a side rear view image captured by a camera, an additional device like a sensor or radar is not required.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed, but that the invention will include all embodiments falling within the scope of the appended claims.

**Claims**

1. An apparatus for use in a vehicle (10) to display a side rear view of the vehicle (10), the apparatus comprising:

    at least one camera (11a, 11b) mountable on the vehicle (10) to take an image (40) of a side rear view of the vehicle (10), the image (40) comprising a first partial image (43) and a second partial image (45), the first and second partial images (43, 45) divided by a reference line (42); at least one display (15a, 15b) configured to display the side rear view of the vehicle (10), a screen (46) of the at least one display (15a, 15b) comprising a first display area (47) for the first partial image (43) to be displayed and a second display area (48) for a third partial image resulting from scaling the second partial image (45) with a scaling factor to be displayed, wherein the scaling factor is variable depending on a width from the reference line (42) to an opposite end of a second vehicle (44) captured in the second partial image (45); and
    a control unit (21) configured to:

        detect an object of the second vehicle (44) in the second partial image (45) to measure the width from the reference line (42) to the opposite end of the second vehicle (44) to determine the scaling factor based on the measured factor; and
        scale the second partial image (45) with the scaling factor to produce the third partial image.

2. The apparatus of claim 1, wherein the first and second display areas (47, 48) have fixed locations on the screen (46) of the at least one display (15a, 15b); and

3. The apparatus of claim 1 or 2, wherein, when the width from the reference line (42) to the opposite end of the second vehicle (44) is equal to or smaller than a threshold, the control unit (21) is configured to display the second partial image (45) on the second display area (48) without scaling.

4. The apparatus of claim 3, wherein the threshold is equal to the width of the second display area (44).

5. The apparatus of any one of the preceding claims, wherein the control unit (21) is configured to increase the scaling factor proportionally depending on the width from the reference line (42) to the opposite end of the second vehicle (44).

6. The apparatus of any one of the preceding claims, wherein scaling the second partial image (45) comprises compressing the second partial image (45) horizontally as much as the scaling factor.

7. The apparatus of any one of the preceding claims, wherein the control unit (21) is further configured to:

    detect an object of the second vehicle (44) in the second partial image (45) to measure the width from the reference line (42) to the opposite end of the second vehicle (44) to determine the scaling factor based on the measured width; and scale the second partial image (45) with the scaling factor to produce the third partial image.

8. The apparatus of any one of the preceding claims, wherein the scaling factor corresponds to a ratio between the width from the reference line (42) to the opposite end of the second vehicle (44) and a width of the second display area (44).

**9.** A method of displaying a side rear view of a vehicle (10) on a display mounted inside the vehicle (10), the method comprising:

obtaining (S31) an image (40) of a side rear view of the vehicle (10), the image (40) taken by a camera (11a, 11b) mounted on the vehicle (10) and comprising a first partial image (43) and a second partial image (45), the first and second partial images (43, 45) divided by a reference line (42);
displaying (S37) the side rear view of the vehicle (10) on the display (15a, 15b), a screen (46) of the display (15a, 15b) comprising a first display area (47, 48) for the first partial image (43) to be displayed and a second display area (48) for a third partial image resulting from scaling the second partial image (45) with a scaling factor to be displayed, wherein the scaling factor is variable depending on a width from the reference line (42) to an opposite end of a second vehicle captured in the second partial image (45); and
determining the scaling factor and processing (S32-S36) the obtained image (40) to be displayed on the display (15a, 15b),
wherein processing (S32-S36) the obtained image comprises:

detecting (S32) an object of the second vehicle (44) in the second partial image (45) to measure (S33) the width from the reference line (42) to the opposite end of the second vehicle (44) to determine the scaling factor based on the measured factor; and
scaling (S36) the second partial image (45) with the scaling factor to produce the third partial image.

**10.** The method of claim 9, wherein, when the width from the reference line (42) to the opposite end of the second vehicle (44) is equal to or smaller than a threshold, the second partial image (45) is displayed on the second display area(48) without scaling.

**11.** The method of any one of claims 9-10, wherein the scaling factor is increased proportionally depending on the width from the reference line (42) to the opposite end of the second vehicle (44).

**12.** The method of any one of claims 9-11, wherein scaling the second partial image (45) comprises compressing the second partial image (45) horizontally as much as the scaling factor.

**13.** A computer program product comprising software code sections which are configured to perform a method according to any one of claims 9-13 when loaded into an internal memory of a control unit (21) of a vehicle (10) comprising an apparatus according to any one of claims 1-8.

**14.** A vehicle (10) comprising an apparatus in accordance with any one of claims 1-8.

**Patentansprüche**

**1.** Vorrichtung zur Verwendung in einem Fahrzeug (10) zum Anzeigen einer seitlichen Rückansicht des Fahrzeugs (10), wobei die Vorrichtung Folgendes aufweist:

mindestens eine Kamera (11a, 11b), die an dem Fahrzeug (10) anbringbar ist, um ein Bild (40) von einer seitlichen Rückansicht des Fahrzeugs (10) aufzunehmen, wobei das Bild (40) ein erstes Teilbild (43) und ein zweites Teilbild (45) umfasst, wobei das erste und das zweite Teilbild (43, 45) durch eine Referenzlinie (42) geteilt sind;
mindestens eine Anzeige (15a, 15b), die zum Anzeigen der seitlichen Rückansicht des Fahrzeugs (10) ausgebildet ist, wobei ein Bildschirm (46) der mindestens einen Anzeige (15a, 15b) einen ersten Anzeigebereich (47) für das anzuzeigende erste Teilbild (43) und einen zweiten Anzeigebereich (48) für ein anzuzeigendes drittes Teilbild (45) umfasst, das aus einer Skalierung des zweiten Teilbilds (45) mit einem Skalierungsfaktor resultiert, wobei der Skalierungsfaktor in Abhängigkeit von einer Breite von der Referenzlinie (42) zu einem gegenüberliegenden Ende eines zweiten Fahrzeugs (44) variabel ist, das in dem zweiten Teilbild (45) aufgenommen ist; und
eine Steuereinheit (21), die ausgebildet ist zum Erfassen eines Objekts des zweiten Fahrzeugs (44) in dem zweiten Teilbild (45) zum Messen der Breite von der Referenzlinie (42) zu dem gegenüberliegenden Ende des zweiten Fahrzeugs (44), um den Skalierungsfaktor auf der Basis des gemessenen Faktors zu bestimmen; und Skalieren des zweiten Teilbilds (45) mit dem Skalierungsfaktor, um das dritte Teilbild zu erzeugen.

**2.** Vorrichtung nach Anspruch 1, wobei der erste und der zweite Anzeigebereich (47, 48) feststehende Positionen auf dem Bildschirm (46) der mindestens einen Anzeige (15a, 15b) aufweisen; und.

**3.** Vorrichtung nach Anspruch 1 oder 2, wobei dann, wenn die Breite von der Referenzlinie (42) zu dem gegenüberliegenden Ende des zweiten Fahrzeugs (44) gleich einem oder kleiner als ein Schwellenwert ist, die Steuereinheit (21) dazu ausgebildet ist, das zweite Teilbild (45) ohne Skalierung auf dem zweiten Anzeigebereich (48) anzuzeigen.

**4.** Vorrichtung nach Anspruch 3, wobei der Schwellenwert gleich der Breite des zweiten Anzeigebereichs (44) ist.

**5.** Vorrichtung nach einem der vorhergehenden Ansprüche, wobei die Steuereinheit (21) dazu ausgebildet ist, den Skalierungsfaktor in Abhängigkeit von der Breite von der Referenzlinie (42) zu dem gegenüberliegenden Ende des zweiten Fahrzeugs (44) proportional zu erhöhen.

**6.** Vorrichtung nach einem der vorhergehenden Ansprüche, wobei das Skalieren des zweiten Teilbilds (45) das horizontale Komprimieren des zweiten Teilbildes (45) mit dem Betrag des Skalierungsfaktors umfasst.

**7.** Vorrichtung nach einem der vorhergehenden Ansprüche, wobei die Steuereinheit (21) ferner dazu ausgebildet ist, ein Objekt des zweiten Fahrzeugs (44) in dem zweiten Teilbild (45) zu erfassen, um die Breite von der Referenzlinie (42) zu dem gegenüberliegenden Ende des zweiten Fahrzeugs (44) zu messen, um den Skalierungsfaktor auf der Basis der gemessenen Breite zu bestimmen; und das zweite Teilbild (45) mit dem Skalierungsfaktor zu skalieren, um das dritte Teilbild zu erzeugen.

**8.** Vorrichtung nach einem der vorhergehenden Ansprüche, wobei der Skalierungsfaktor einem Verhältnis zwischen der Breite von der Referenzlinie (42) bis zu dem gegenüberliegenden Ende des zweiten Fahrzeugs (44) und einer Breite des zweiten Anzeigebereichs (44) entspricht.

**9.** Verfahren zum Anzeigen einer seitlichen Rückansicht eines Fahrzeugs (10) auf einer Anzeige, die im Inneren des Fahrzeugs (10) angebracht ist, wobei das Verfahren folgende Schritte aufweist:

Ermitteln (S31) eines Bilds (40) von einer seitlichen Rückansicht des Fahrzeugs (10), wobei das Bild (40) von einer am Fahrzeug (10) angebrachten Kamera (11a, 11b) aufgenommen wird und ein erstes Teilbild (43) und ein zweites Teilbild (45) umfasst, wobei das erste und das zweite Teilbild (43, 45) durch eine Referenzlinie (42) geteilt sind; Anzeigen (S37) der seitlichen Rückansicht des Fahrzeugs (10) auf der Anzeige (15a, 15b), wobei ein Bildschirm (46) der Anzeige (15a, 15b) einen ersten Anzeigebereich (47, 48) für das anzuzeigende erste Teilbild (43) und einen zweiten Anzeigebereich (48) für ein anzuzeigendes drittes Teilbild aufweist, das aus einer Skalierung des zweiten Teilbilds (45) mit einem Skalierungsfaktor resultiert, wobei der Skalierungsfaktor in Abhängigkeit von einer Breite von der Referenzlinie (42) zu einem gegenüberliegenden Ende eines zweiten Fahrzeugs variabel ist, das in dem zweiten Teilbild (45) aufgenommen ist; und Bestimmen des Skalierungsfaktors und Verarbeiten (S32-S36) des auf der Anzeige (15a, 15b) anzuzeigenden ermittelten Bilds (40), wobei das Verarbeiten (S32-S36) des ermittelten Bilds umfasst:

Erfassen (S32) eines Objekts des zweiten Fahrzeugs (44) in dem zweiten Teilbild (45) zum Messen (S33) der Breite von der Referenzlinie (42) zu dem gegenüberliegenden Ende des zweiten Fahrzeugs (44), um den Skalierungsfaktor auf der Basis des gemessenen Faktors zu bestimmen; und Skalieren (S36) des zweiten Teilbilds (45) mit dem Skalierungsfaktor, um das dritte Teilbild zu erzeugen.

**10.** Verfahren nach Anspruch 9, wobei dann, wenn die Breite von der Referenzlinie (42) zu dem gegenüberliegenden Ende des zweiten Fahrzeugs (44) gleich dem oder kleiner als ein Schwellenwert ist, das zweite Teilbild (45) ohne Skalierung auf dem zweiten Anzeigebereich (48) angezeigt wird.

**11.** Verfahren nach einem der Ansprüche 9 bis 10, wobei der Skalierungsfaktor in Abhängigkeit von der Breite von der Referenzlinie (42) zu dem gegenüberliegenden Ende des zweiten Fahrzeugs (44) proportional erhöht wird.

**12.** Verfahren nach einem der Ansprüche 9 bis 11, wobei das Skalieren des zweiten Teilbilds (45) das horizontale Komprimieren des zweiten Teilbildes (45) mit dem Betrag des Skalierungsfaktors umfasst.

**13.** Computerprogrammprodukt mit Softwarecodeabschnitten, die dazu ausgebildet sind, ein Verfahren nach einem der Ansprüche 9 bis 13 auszuführen, wenn sie in einen internen Speicher einer Steuereinheit (21) eines Fahrzeugs (10) mit einer Vorrichtung nach einem der Ansprüche 1 bis 8 geladen werden.

**14.** Fahrzeug (10) mit einer Vorrichtung nach einem der Ansprüche 1 bis 8.

**Revendications**

1. Appareil pour son utilisation dans un véhicule (10), qui est destiné à afficher une vue arrière latérale du véhicule (10), l'appareil comprenant :

   au moins une caméra (11a, 11b) qui peut être montée sur le véhicule (10) dans le but d'enregistrer une image (40) d'une vue arrière latérale du véhicule (10), l'image (40) comprenant une première image partielle (43) et une deuxième image partielle (45), la première et la deuxième image partielle (43, 45) étant séparées par une ligne de référence (42) ;
   au moins un affichage (15a, 15b) qui est configuré pour afficher la vue arrière latérale du véhicule (10), un écran (46) dudit au moins un affichage (15a, 15b) comprenant une première zone d'affichage (47) pour la première image partielle (43) qui doit être affichée et une seconde zone d'affichage (48) pour une troisième image partielle, qui résulte d'une mise à l'échelle de la deuxième image partielle (45) avec un facteur de mise à l'échelle, qui doit être affichée ; dans lequel le facteur de mise à l'échelle est variable en fonction d'une largeur entre la ligne de référence (42) et une extrémité opposée d'un deuxième véhicule (44) capturée dans la deuxième image partielle (45) ; et
   une unité de commande (21) qui est configurée pour :

      détecter un objet du deuxième véhicule (44) dans la deuxième image partielle (45) dans le but de mesurer la largeur entre la ligne de référence (40) et l'extrémité opposée du deuxième véhicule (44) afin de déterminer le facteur de mise à l'échelle en se basant sur le facteur de mise à l'échelle mesuré ; et
      mettre à l'échelle la deuxième image partielle (45) avec le facteur de mise à l'échelle afin d'obtenir la troisième image partielle.

2. Appareil selon la revendication 1, dans lequel la première et la seconde zone d'affichage (47, 48) possèdent des emplacements fixes sur l'écran (46) dudit au moins un affichage (15a, 15b) ; et.

3. Appareil selon la revendication 1 ou 2, dans lequel, lorsque la largeur entre la ligne de référence (42) et l'extrémité opposée du deuxième véhicule (44) est égale ou inférieure à un seuil, l'unité de commande (21) est configurée pour afficher la deuxième image partielle (45) sur la seconde zone d'affichage (48) en l'absence d'une mise à l'échelle.

4. Appareil selon la revendication 3, dans lequel le seuil est égal à la largeur de la seconde zone d'affichage (44).

5. Appareil selon l'une quelconque des revendications précédentes, dans lequel l'unité de commande (21) est configurée pour augmenter le facteur de mise à l'échelle de manière proportionnelle en fonction de la largeur entre la ligne de référence (42) et l'extrémité opposée du deuxième véhicule (44).

6. Appareil selon l'une quelconque des revendications précédentes, dans lequel la mise à l'échelle de la deuxième image partielle (45) comprend le fait de comprimer la deuxième image partielle (45) en direction horizontale dans une mesure identique à celle du facteur de mise à l'échelle.

7. Appareil selon l'une quelconque des revendications précédentes, dans lequel l'unité de commande (21) est en outre configurée pour :

   détecter un objet du deuxième véhicule (44) dans la deuxième image partielle (45) afin de mesurer la largeur entre la ligne de référence (42) et l'extrémité opposée du deuxième véhicule (44) dans le but de déterminer le facteur de mise à l'échelle en se basant sur la largeur mesurée ; et
   mettre à l'échelle la deuxième image partielle (45) avec le facteur de mise à l'échelle afin d'obtenir la troisième image partielle.

8. Appareil selon l'une quelconque des revendications précédentes, dans lequel le facteur de mise à l'échelle correspond à un rapport entre la largeur qui s'étend entre la ligne de référence (42) et l'extrémité opposée du deuxième véhicule (44) et une largeur de la seconde zone d'affichage (44).

9. Procédé d'affichage d'une vue latérale arrière d'un véhicule (10) sur un affichage monté à l'intérieur du véhicule (10), le procédé comprenant le fait de :

   obtenir (S31) une image (40) d'une vue arrière latérale du véhicule (10), l'image (40) étant enregistrée par une caméra (11a, 11b) montée sur le véhicule (10) et comprenant une première image partielle (43) et une deuxième image partielle (45), la première et la deuxième image partielle (43, 45) étant séparées par une ligne de référence (42) ;
   afficher (S37) la vue arrière latérale du véhicule (10) sur affichage (15a, 15b), un écran (46) de l'affichage (15a, 15b) comprenant une première zone d'affichage (47, 48) pour la première image partielle (43) qui doit être affichée et une seconde zone d'affichage (48) pour une troisième image partielle, qui résulte d'une mise à l'échelle de la deuxième image partielle (45) avec un facteur de mise à l'échelle, qui doit être affichée ; dans lequel le facteur de mise à l'échelle est variable en fonction d'une largeur entre la ligne de référence (42) et une extrémité opposée d'un deuxième véhicule (44) capturée dans la deuxième image partielle (45) ; et
déterminer le facteur de mise à l'échelle et traiter (S32-S36) l'image obtenue (40) qui doit être affichée sur l'affichage (15a, 15b) ;
dans lequel le traitement de (S32-S36) l'image obtenue comprend le fait de :

détecter (S32) un objet du deuxième véhicule (44) dans la deuxième image partielle (45) dans le but de mesurer (S33) la largeur entre la ligne de référence (42) et l'extrémité opposée du deuxième véhicule (44) afin de déterminer le facteur de mise à l'échelle en se basant sur le facteur mesuré ; et
mettre à l'échelle (S36) la deuxième image partielle (45) avec le facteur de mise à l'échelle afin d'obtenir la troisième image partielle.

10. Procédé selon la revendication 9, dans lequel, lorsque la largeur entre la ligne de référence (40) et l'extrémité opposée du deuxième véhicule (44) est égale ou inférieure à un seuil, la deuxième image partielle (45) est affichée sur la seconde zone d'affichage (48) en l'absence d'une mise à l'échelle.

11. Procédé selon l'une quelconque des revendications 9 à 10, dans lequel le facteur de mise à l'échelle augmente de manière proportionnelle en fonction de la largeur entre la ligne de référence (42) et l'extrémité opposée du deuxième véhicule (44).

12. Procédé selon l'une quelconque des revendications 9 à 11, dans lequel la mise à l'échelle de la deuxième image partielle (45) comprend le fait de comprimer la deuxième image partielle (45) en direction horizontale dans une mesure identique à celle du facteur de mise à l'échelle.

13. Produit de programme ordinateur comprenant des sections de codes de logiciels qui sont configurées pour la mise en œuvre d'un procédé selon l'une quelconque des revendications 9 à 13, lorsqu'elles sont chargées dans une mémoire interne d'une unité de commande (21) d'un véhicule (10) comprenant un appareil selon l'une quelconque des revendications 1 à 8.

14. Véhicule (10) comprenant un appareil selon l'une quelconque des revendications 1 à 8.

# Fig. 1

# Fig. 2

# Fig. 3

Start

obtain an image of
side rear view ── S31

S32

a vehicle
in a second partial
image? ── No

Yes

measure a width ($X_{CS}$) from
a vertical reference line to
an end of the detected vehicle ── S33

S34

$X_{CS} > X_{DS}$ ? ── No

Yes

calculate a scaling factor
(s) ── S35

compress the second partial
image with the scaling factor (s) ── S36

S37 ── display the 1st & 2nd partial
image on the display

End

# Fig. 4A

EP 3 536 557 B1

# Fig. 4B

43  42  45  40

10

$X_{CP}$   $X_{CS}$

$W_C$

47   48

44

46

10

$X_{DP}$   $X_{DS}$

$W_D$

44

13

# Fig. 4C

$X_{CP}$

$X_{CS}$

$W_C$

$X_{DP}$

$X_{DS}$

$W_D$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017204203 A1